Europäisches Patentamt

European Patent Office

Office européen des brevets

(19)

(11) Veröffentlichungsnummer: **0 272 570 B1**

## (12) EUROPÄISCHE PATENTSCHRIFT

(45) Veröffentlichungstag der Patentschrift: **01.04.92**

(51) Int. Cl.⁵: **B60K 23/08**

(21) Anmeldenummer: **87118453.7**

(22) Anmeldetag: **12.12.87**

(54) **Antriebssystem für die Räder zweier Radpaare.**

(30) Priorität: **20.12.86 DE 3643831**

(43) Veröffentlichungstag der Anmeldung:
**29.06.88 Patentblatt 88/26**

(45) Bekanntmachung des Hinweises auf die
Patenterteilung:
**01.04.92 Patentblatt 92/14**

(84) Benannte Vertragsstaaten:
**AT BE CH DE ES FR GB IT LI**

(56) Entgegenhaltungen:
**EP-A- 0 090 944**
**DE-A- 3 440 492**
**DE-C- 3 545 545**
**GB-A- 2 087 809**
**GB-A- 2 140 104**

(73) Patentinhaber: **DEERE & COMPANY**
**1 John Deere Road**
**Moline, Illinois 61265(US)**

(72) Erfinder: **Hückler, Volker**
**Rossittenstrasse 11**
**W-7760 Radolfzell 16(DE)**
Erfinder: **Schwarz, Reinhard**
**Jahnstrasse 7**
**W-7519 Gondelsheim(DE)**
Erfinder: **Nobis, Dieter**
**Reutestrasse 23**
**W-7901 Lonsee-Halzhausen(DE)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

**Beschreibung**

Die Erfindung betrifft ein Antriebssystem für die Räder zweier Radpaare eines Kraftfahrzeuges, wobei die Räder mindestens eines Radpaares lenkbar sind und deren Lenkwinkel und Drehzahl mittels Fühlern erfaßbar sind, mit einem Regelkreis, mit jeweils einem Radpaar zugeordneten Differentialen mit Differentialsperren, die in Abhängigkeit von der Größe des Lenkwinkels über den Regelkreis betätigt werden und mit einem über den Regelkreis betätigten Stellglied, das zwischen den beiden Differentialen vorgesehen ist.

Bei einem derartigen Antriebssystem (DE-A-34 40 492) werden vordere und rückwärtige Räder eines Ackerschleppers jeweils über ein Differential mit einer lastschaltbaren Differentialsperre angetrieben. Der Antrieb des vorderen Radpaares erfolgt zudem über eine Zuschaltkupplung von einem Hauptgetriebe aus. Zur Steuerung der Differentialsperren und der Zuschaltkupplung ist ein Regelkreis vorgesehen, mittels dessen die Größe und der Zeitpunkt des Kraftschlusses der Differentialsperren geregelt werden, wohingegen die Zuschaltkupplung nur einen ein- oder einen ausgerückten Zustand einnehmen kann und grundsätzlich eine starre Verbindung zwischen dem vorderen und dem rückwärtigen Radsatz herstellt. Der Regelkreis vergleicht gespeicherte Sollwerte von Geschwindigkeitsdifferenzen an den Antriebswellen der jeweiligen Räder bei allen möglichen Lenkwinkeln und vergleicht diese mit erfaßten Istwerten, um die Differentialsperren zu betätigen oder nicht bzw. in welchem Maße.

Diesem bekannten Antriebssystem haftet der Nachteil an, daß bei einer Kurvenfahrt zwar eine Relativdrehung der Räder einerseits gegenüber den Rädern andererseits durch den Regelkreis erlaubt wird; eine Verspannung zwischen dem vorderen Radsatz und dem rückwärtigen Radsatz bleibt aber erhalten, weil unter- bzw. oberhalb eines optimalen Punktes die vorderen Räder den rückwärtigen vor- bzw. nacheilen.

Diese Verspannung könnte zwar durch ein öffnen der Zuschaltkupplung über den Regelkreis erfolgen, dann wäre aber der Kraftfluß zu den vorderen Rädern unterbrochen und diese könnten die Fortbewegung des Kraftfahrzeuges nicht mehr unterstützen.

Aus der DE-A-34 37 435 ist eine Anordnung bekannt, die zur Steuerung der Kraftübertragung eines vierradangetriebenen Fahrzeuges dient. Es handelt sich dabei um Fahrzeuge, bei denen aufgrund hoher Geschwindigkeiten Probleme im Fahrverhalten, insbesondere während einer Kurvenfahrt, auftreten. Dementsprechend ist die Aufgabe auch darauf gerichtet, die Kraftübertragung auf die Achsen eines vierradangetriebenen Kraftfahrzeugs so zu steuern, daß traktionsbedingte Vorteile des Vierradantriebs mit den Vorteilen des Fahrverhaltens des Zweiradantriebs kombiniert werden. Für eine derartige Steuerung kommt es auf die Größe des Lenkwinkels und auf dessen Erfassung nicht an. Vielmehr und ausschließlich werden für die Steuerung Parameter wie der Fahrwiderstand, Motordrehzahl, Drosselklappenwinkel, Ladedruck und vieles mehr benötigt, aus denen sich die Zugkraft ermitteln läßt. Somit werden Verspannungen in der Kraftübertragung nicht beseitigt, sondern nur in Grenzen gehalten.

In der EP-A-0 090 944 ist ein Differentialgetriebe beschrieben, das den Antrieb auf die Räder einer Vorderachse und einer Hinterachse verteilt, wobei eine als Lamellenkupplung ausgebildete Differentialsperre zwischen dem Antrieb zur Vorder- und Hinterachse in ihrem Sperrgrad variabel ist. Hierzu wird über einen Hydraulikkolben das Lamellenpaket in veränderlichem Maß zusammengepreßt. Der Sperrgrad wird mittels eines elektronischen Rechners insbesondere in Abhängigkeit von der Größe der Fahrgeschwindigkeit, des Lenkwinkels oder des Motordrehmoments bestimmt. Dieser Vorrichtung haftet der Nachteil an, daß ein Antrieb zu den Rädern der Vorderachse nicht stattfindet, solange die Lamellenkupplung nicht beaufschlagt ist. Weiterhin können Undichtigkeiten in dem hydraulischen Betätigungskreis zu einer Abweichung des gewollten von dem erreichten Sperrgrad führen. Zum Aufbauen eines Sperrmoments muß das Druckmittel zunächst unter Druck gesetzt werden, was bei niedrigen Temperaturen aufgrund der Steifheit von Hydrauliköl zu einer Zeitverzögerung führen kann. Schließlich wird nur der Sperrgrad dieses Zwischendifferentials geregelt.

Aus der DE-A-33 13 823 ist ein Antriebssystem mit drei stufenlos sperrbaren Differentialen bekannt geworden. Die Steuerung dieser Differentiale erfolgt über eine Prozessoreinrichtung, der als Eingangswerte die Höhe der Drehzahl jedes angetriebenen Rades zugeführt werden. Überdies findet eine Regelung des Sperrgrades in dem mittleren Differential und dessen Sperrung nur statt, wenn die Prozessoreinrichtung in Betrieb und die Energiequelle aktiv ist.

All diesen Vorrichtungen ist gemein, daß sie für einen Regelvorgang zum Sperren des mittleren Differentials zunächst ein Druckmittel unter Druck setzen und es unter Druck halten müssen, wenn ein Sperrvorgang erfolgen soll.

Die der Erfindung zugrunde liegende Aufgabe wird darin gesehen, das Antriebssystem derart zu verbessern, daß auch die beim Kurvenfahren entstehenden unterschiedlichen Abrollgeschwindigkeiten der vorderen und der rückwärtigen Räder über den Regelkreis ausgeglichen werden können.

Diese Aufgabe ist erfindungsgemäß durch die kennzeichnenden Merkmale des Patentanspruchs 1 gelöst worden, so daß zwischen beiden Differentialen ein weiteres sperrbares Differential vorgesehen ist, dessen Sperrgrad mittels des Regelkreises regelbar ist.

Auf diese Weise kann, ohne daß der Kraftfluß zu den vorderen oder den rückwärtigen Rädern unterbrochen werden müßte, ein Ausgleich der Abrollgeschwindigkeiten der vorderen und der rückwärtigen Räder erfolgen, wobei in dem Fall, daß beide Räder eines der Radpaare durchrutschen, über die nunmehr dritte Differentialsperre ein Abstützmoment aufgebaut werden kann, das verhindert, daß die Antriebskraft nur den nicht greifenden Rädern zugeführt wird.

In den Unteransprüchen sind die Erfindung fortentwickelnde Maßnahmen angegeben.

So wird beim Ausfall eines Versorgungssystems, etwa des Regelkreises, die Differentialsperre des weiteren Differentials mittels einer Feder eingerückt, so daß an allen Rädern Antriebskraft vorhanden ist und zwar auch in dem Fall, daß sie nicht erforderlich ist, was jedoch keinen Nachteil darstellt. Als Feder kann sowohl eine mechanische Feder wie auch ein Druckmittelspeicher oder ein Elektromagnet verwendet werden. Daraus ergibt sich überdies der Vorteil, daß bei einem zum Parken abgestellten Kraftfahrzeug eine Verbindung zwischen beiden Radsätzen besteht, die aufgrund eines normalerweise gegebenen Vorlaufes der vorderen Räder von 3 bis 5 % leicht verspannt ist und das Kraftfahrzeug so an einem widerstandslosen, ungewollten Fortrollen hindert.

In vorzüglicher Weise wird eine entsprechende Verteilung der Antriebsmomente, z. B. 30:70 bei einem Ackerschlepper, durch eine entsprechende Ausgestaltung des weiteren Differentials erreicht. Hierzu können bei einem Kegelraddifferential unterschiedich große Kegelradstufen oder bei einem Planetendifferential entsprechende Übersetzungsverhältnisse gewählt werden. Gegebenenfalls kann bei einer sich ändernden Achslastverteilung auch eine sich daran anpassende Beeinflussung der Momentenverteilung an dem weiteren Differential vorgenommen werden.

Um auch bei einem langanhaltenden Schlupfzustand an der Differentialsperre des weiteren Differentials Störungen durch eine übermäßige Hitzeentwicklung zu vermeiden, ist ein weiterer Fühler zum Erfassen von deren Temperatur vorgesehen, der direkt mit dem Regelkreis verbunden sein kann, um über diesen eine Änderung des Sperrgrades an dem weiteren Differential durchzuführen, oder er kann so ausgebildet sein, daß er lediglich auf eine Warnanzeige wirkt.

Je nach der Ausrüstung des Kraftfahrzeuges können anstatt oder sogar ergänzend zu den vorgenannten Differentialsperren auch Einzelradbremsen vorgesehen sein die das jeweils freidrehende Rad abbremsen und somit mittels des Differentials die diesem zugedachte Antriebskraft auf das andere und Antriebskraft übertragende Rad übertragen. Im Gegensatz zu der Ausführung mit einer Differentialsperre wird also das noch treibende Rad nicht nur mit der ihm zustehenden Antriebskraft angetrieben, sondern mit der beiden Rädern zustehenden, so daß es im Vergleich zu dem Normalfall doppelt so viel zieht. Die gleichen Vorteile erwachsen auch, wenn zu den Differentialen der Radpaare führende Antriebswellen mittels separater Bremsen abbremsbar sind.

Vorteile in der Ansprechzeit und der Sicherheit beim Ausfall des Regelkreises ergeben sich durch die Verwirklichung von Anspruch 6, da in diesem Fall nicht zuerst abgefragt werden muß, ob ein zu beseitigender Schlupf vorhanden ist, und erst nach Erhalt einer positiven Antwort die betreffenden Differentiale gesperrt werden.

In der Zeichnung ist ein nachfolgend näher beschriebenes Ausführungsbeispiel der Erfindung dargestellt. Es zeigt:

Figur 1    ein Kraftfahrzeug mit einem erfindungsgemäßen Antriebssystem in schematischer Darstellung und

Figur 2    eine Schaltlogik zum Regeln des Antriebssystems des Kraftfahrzeuges.

Ein Kraftfahrzeug 10, insbesondere ein Ackerschlepper, ist mit vorderen lenkbaren und rückwärtigen Rädern 12 und 14 ausgerüstet, die zu jeweils einem Radpaar zusammengefaßt und als solches antreibbar sind. Der Antrieb der Räder 12, 14 erfolgt von einem Motor 16 aus über ein Getriebe 18, ein vorderes Differential 20 für den vorderen Radsatz 12, ein rückwärtiges Differential 22 für den rückwärtigen Radsatz 14 und ein weiteres mittleres Differential 24 zwischen dem Getriebe 18 und dem vorderen und dem rückwärtigen Differential 20, 22. Zwischen dem vorderen Differential 20 und den vorderen Rädern 12 erstreckt sich jeweils eine Halbwelle 26, 26', zwischen dem rückwärtigen Differential 22 und den rückwärtigen Rädern 14 erstreckt sich jeweils eine Halbwelle 28, 28' und zwischen dem mittleren Differential 24 und dem vorderen und dem rückwärtigen Differential 20 und 22 erstreckt sich jeweils eine Antriebswelle 30 bzw. 32.

Die vorderen Räder 12 sind über eine Lenkvorrichtung 34 horizontal schwenkbar an einer nicht dargestellten Vorderachse angebracht und weisen einen kleineren Außendurchmesser auf als die rückwärtigen Räder 14. Die auf den vorderen Rädern 12 ruhende Achslast beträgt in diesem Ausführungsbeispiel 30 % der gesamten Last des Kraftfahrzeuges 10, und es soll erreicht werden, daß über die vorderen Räder 12 30 % der übertragbaren Antriebskraft übertragen werden.

Die rückwärtigen Räder 14 sollen die verbleibenden 70 % der Antriebskraft auf den Boden übertragen.

Der Motor 16 und das Getriebe 18 sind von herkömmlicher Bauweise, d. h. daß mit dem Getriebe beispielsweise zwölf Vorwärtsgänge und 8 Rückwärtsgänge bei einer Maximalgeschwindigkeit von ca. 40 km/h erreicht werden können. Zur Einleitung der Antriebskraft vom Getriebe 18 aus auf das mittlere Differential 24 ist ein Ringrad 36 vorgesehen, das fest mit dem mittleren Differential 24 verbunden ist.

Alle Differentiale 20, 22 und 24 sind als Kegelraddifferentiale ausgebildet - es könnten jedoch auch Planetendifferentiale verwendet werden. Während die Kegelradstufen in dem vorderen und dem rückwärtigen Differential 20 und 22 für jede Seite gleich sind, so daß an die Halbwellen 26, 26' und 28, 28' eines Radsatzes 12, 14 jeweils die gleiche Antriebskraft bei gleicher Drehzahl übertragen werden kann, sind die Kegelradstufen in dem mittleren Differential 24 unterschiedlich groß, so daß bei geringfügigem Vorlauf der vorderen Räder 12 an diese 30 % der Antriebsleistung und an die rückwärtigen Räder 14 70 % der Antriebsleistung weitergeleitet wird. Außerdem sind alle Differentiale 20 bis 24 mit einer Differentialsperre 38, 40 und 42 ausgestattet, die alle kraftschlüssig und unter Last einrückbar sind. Bei diesem Ausführungsbeispiel sind zu diesem Zwecke Lamellenkupplungen an den Differentialsperren 38 bis 42 vorgesehen, wobei die Differentialsperre 42 des mittleren Differentials 24 mittels einer Feder 44 in der Form einer Tellerfeder eingerückt und mittels eines Hydraulikkolbens 46 ausgerückt wird. Hingegen werden die Differentialsperren 38, 40 des vorderen und des rückwärtigen Differentials 20 und 22 unter Hydraulikdruck über einen Hydraulikkolben 48 bzw. 50 eingerückt.

Die vorderen wie auch die rückwärtigen Halbwellen 26, 26', 28, 28' sind jeweils drehfest mit einer Fühlerscheibe 52 verbunden, die jeweils einem Fühler 54 zugeordnet ist und gemeinsam mit diesem die Drehzahl der jeweiligen Halbwelle 26, 26', 28, 28' erfaßt. Die Halbwellen 26, 26', 28, 28' sind einenends mit dem ihnen zugeordneten Differential 20 oder 22 und anderenends mit den Rädern 12, 14 drehfest verbunden, um die Antriebskraft übertragen zu können.

Zur Übertragung der Antriebskraft von dem mittleren Differential 24 zu dem vorderen und dem rückwärtigen Differential 20 und 22 sind die Antriebswellen 30 und 32 vorgesehen, die ebenfalls eine Fühlerscheibe 52 aufweisen, denen ein Fühler 54 zugeordnet ist.

Während die den Halbwellen 26, 26', 28, 28' zugeordneten Fühler 54 die Drehzahl jeweils eines bestimmten Rades 12 oder 14 ermitteln, wird mittels der Fühler 54 auf den Antriebswellen 30, 32 die Antriebsdrehzahl des vorderen und des rückwärtigen Differentials 20 und 22 festgestellt.

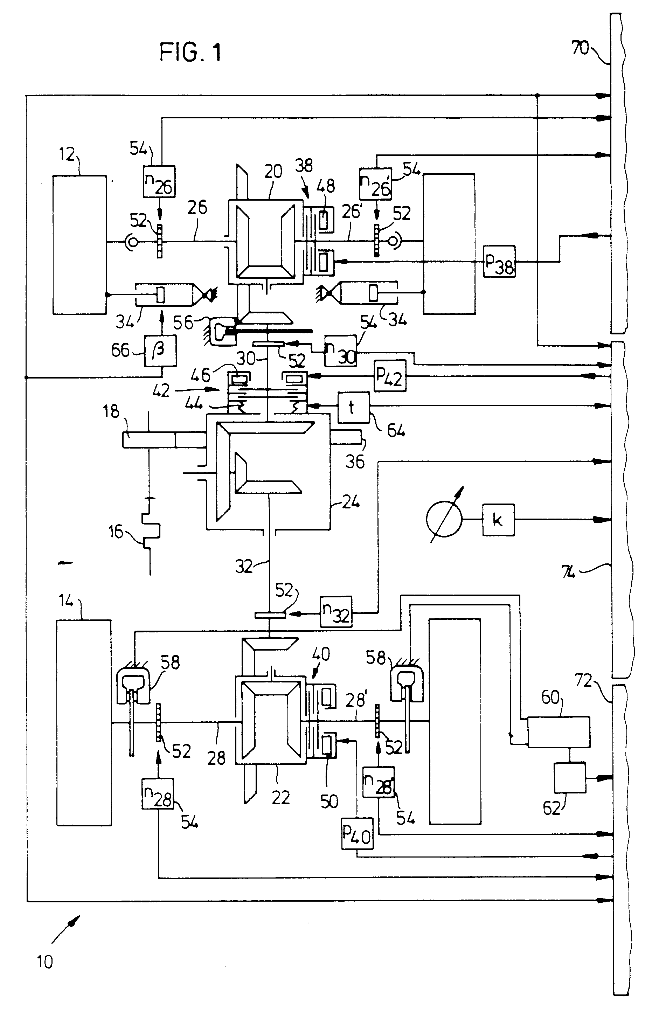

Figur 1 ist ferner zu entnehmen, daß die vordere Antriebswelle 30 wie auch die beiden rückwärtigen Halbwellen 28, 28' mit einer separaten Bremse 56 und 58 ausgestattet sind, die gemeinsam oder unabhängig voneinander betätigbar sind. Jedoch könnte die auf der vorderen Antriebswelle 30 vorgesehene Bremse 56, die gleichzeitig auf beide vorderen Räder 12 wirkt, auch durch separate Bremsen auf jeweils einer der vorderen Halbwellen 26, 26' ersetzt werden. Die Betätigung der Bremsen 56, 58 erfolgt über eine Bremsvorrichtung 60 auf einer nicht gezeigten Fahrerplattform, wobei zum Erfassen einer Bremsenbetätigung ein Fühler 62 an der Bremsvorrichtung 60 angebracht ist.

Ferner sind ein Fühler 64 zum Erfassen der Temperatur an der Differentialsperre 42 des mittleren Differentials 24 und ein Fühler 66 zum Ermitteln des Lenkwinkels β der vorderen Räder 12 vorgesehen.

Schließlich enthält das Kraftfahrzeug 10 einen Regelkreis 68, dem alle von den Fühlern 54, 62, 64 und 66 ermittelten Werte zugeführt werden. Dem Regelkreis 68 kann auch ein Korrektursignal (k) eingegeben werden, das eine Eichung des Regelkreises 68 zuläßt, sofern dies erforderlich ist, das die unterschiedlich großen Reifendurchmesser der vorderen und der rückwärtigen Räder 12 und 14 berücksichtigt und das einen gewollten Vor- oder Nachlauf eingibt. Nachdem der Regelkreis 68 die ihm zugeführten Signale verarbeitet hat, bildet er Ausgangssignale, die den Druck an den Hydraulikkolben 46, 48, 50 der Differentialssperren 38 bis 42 regeln.

Es wird darauf verzichtet, im Detail zu erklären, wie die Druckbeaufschlagung an den Lamellenkupplungen der Differentialsperren 38 bis 42 erfolgt, da dies auf herkömmliche Weise, nämlich mittels nicht gezeigter Leitungen, elektrisch betätigbarer Ventile und mindestens einer Pumpe, geschieht, wobei der Druck der Pumpe oder der Durchlaß der Ventile in Abhängigkeit von den Ausgangssignalen des Regelkreises 68 geregelt wird.

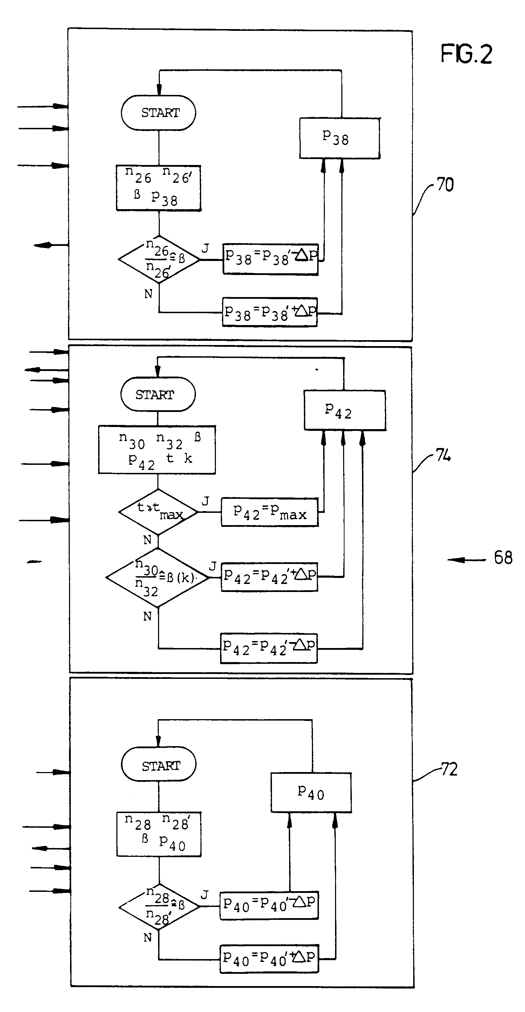

Im folgenden wird auf die in Figur 2 dargestellte Schaltlogik verwiesen, die die einzelnen Schritte beim Verarbeiten der von den Fühlern 54, 62, 64, 66 erhaltenen Signale bis zum Erstellen der Ausgangssignale verdeutlicht.

Der Regelkreis 68 ist in drei Recheneinheiten unterteilt, und zwar eine Recheneinheit 70 für die vorderen Räder 12 bzw. die vordere Differentialsperre 38, in eine Recheneinheit 72 für die rückwärtige Differentialperre 40 und eine Recheneinheit 74 für die mittlere Differentialsperre 42. Wenn dies auch nicht dargestellt ist, so ist es dennoch selbstverständlich, daß auch Maßnahmen getroffen sind, den Regelkreis 68 nur wahlweise einzuschalten und dann, falls gewünscht, die einzelnen Differentialsperren 38 bis 42 manuell zu steuern.

Der vorderen Recheneinheit 70 werden von den Fühlern 54 zur Erfassung der Drehzahlen der vorderen Halbwellen 26, 26' und von dem Fühler 66 zum Erfassen des Lenkwinkels $\beta$ der vorderen Räder 12 Eingangssignale zugeführt, die nach einer Verarbeitung zu einem Ausgangssignal verarbeitet werden, das die Höhe des Druckes an der vorderen Differentialsperre 38 bestimmt. Hierzu wird eingangs der Recheneinheit 70 das Verhältnis der Drehzahlen der beiden Halbwellen 26, 26' zueinander ermittelt und mit einer für den gerade gegebenen Lenkwinkel $\beta$ gespeicherten Verhältnisgröße verglichen. Entspricht die gespeicherte Verhältnisgröße der gerade ermittelten, dann wird der Druck an der Differentialsperre 38 um ein bestimmtes Maß reduziert. Nach dem Ablauf einer festgelegten Zeitspanne, die die Länge von Sekunden oder Sekundenbruchteilen besitzt, erfolgt erneut eine Ermittlung der Ist-Verhältnisgröße. In dem Falle, daß diese neue Verhältnisgröße in ihrem Betrag größer ist als die für den gegebenen Lenkwinkel $\beta$ gespeicherte, wird der Druck an der Lamellenkupplung der vorderen Differentialsperre 38 um ein bestimmtes Maß erhöht, d. h. der Sperrgrad wird vergrößert. Es ist möglich, beim Erhöhen wie auch beim Absenken des Druckes an der Differentialsperre 38 gleiche Stufensprünge anzulegen; allerdings ist es auch denkbar, zur Druckerhöhung in größeren Stufen vorzugehen als zur Druckherabsetzung. Solange der Regelkreis 68 zugeschaltet ist, findet zu stets gleichen Zeitintervallen eine Abfrage in der Recheneinheit 70 statt, so daß bei einer Zustandsänderung im Antriebsverhalten der vorderen Räder 12 unverzüglich ein neuer Wert für den Druck an der vorderen Differentialsperre 38 gebildet wird.

Die rückwärtige Recheneinheit 72 entspricht in ihrer Funktion der vorderen Recheneinheit 70, wobei als Eingangsgrößen nunmehr die Drehzahlen der rückwärtigen Halbwellen 28, 28' herangezogen werden und als Ausgangsgröße der Druck der Lamellenkupplung der rückwärtigen Differentialsperre 40 bestimmt wird. Außerdem ist eine Sperrlogik installiert, die bewirkt, daß die Recheneinheit 72 ein Ausgangssignal zum Öffnen der Differentialsperre 40 der rückwärtigen Räder 14 aussendet, wenn der Fühler 62 feststellt, daß nur eine der beiden rückwärtigen Bremsen 58 betätigt worden ist, wenn diese also als Lenkbremse wirken soll.

Der mittleren Recheneinheit 74 werden als Eingangsgrößen von den Fühlern 54 die Drehzahlen der vorderen und der rückwärtigen Antriebswelle 30, 32, von dem Fühler 64 die Temperatur an der Lamellenkupplung der mittleren Differentialsperre 42, von dem Fühler 66 die Größe des Lenkwinkels

$\beta$ und über eine nicht gezeigte Eingabeeinrichtung das Korrektursignal zugeführt. Aus diesen Eingangsgrößen wird ein Ausgangssignal gebildet, das die Höhe des Druckes an der Lamellenkupplung der mittleren Differentialsperre 42 bestimmt. Zur Bestimmung des Ausgangssignals wird zunächst abgefragt, ob die ermittelte Temperatur (t) oberhalb einer maximal zulässigen Temperatur (t max) liegt. Ist dies der Fall, dann wird die weitere Abfrage umgangen und der bisherige Sperrgrad an der mittleren Differentialsperre 42 beibehalten. Gegebenenfalls kann auch ein Notkreis installiert sein, der bewirkt, daß die Differentialsperre 42 vollkommen geöffnet wird, wenn eine bestimmte Temperatur erreicht ist, wozu der Druck auf ein Maximum zu erhöhen ist, da die mittlere Differentialsperre 42 mittels der Feder 44 ein- und mittels Druckmittel ausgerückt wird. Für den Fall, daß die ermittelte Temperatur unterhalb der maximal zulässigen Temperatur liegt, wird wie bei den Recheneinheiten 70 und 72 für die vorderen und die rückwärtigen Räder 12 und 14 eine Verhältnisgröße aus den Drehzahlen der vorderen und der rückwärtigen Antriebswelle 30 und 32 gebildet und mit einer gespeicherten Soll-Verhältnisgröße für den gegebenen Lenkwinkel $\beta$ verglichen. Entspricht die Ist-Verhältnisgröße der Soll-Verhältnisgröße, dann wird der Druck an der Lamellenkupplung um ein bestimmtes Maß erhöht, um die Differentialsperre 42 entgegen der Wirkung der Feder 44 partiell zu öffnen. Weichen die Ist- und die Soll-Verhältnisgröße jedoch betragsmäßig voneinander ab, dann wird der Druck an der Lamellenkupplung reduziert, um das Sperrmoment der Differentialsperre 42 des mittleren Differentials 24 zu erhöhen. Bei der Ermittlung der Soll-Verhältnisgröße wird die Größe des Korrektursignals miteinbezogen, so daß die unterschiedlichen Reifendurchmesser und ein gewollter Vor- oder Nachlauf berücksichtigt werden können.

Es ist zu erkennen, daß die drei Recheneinheiten 70 bis 74 vollkommen unabhängig voneinander arbeiten und daß beim Auftreten von Schlupf an einem der Räder 12 und/oder 14 zunächst die dem jeweiligen Radpaar 12, 14 zugeordnete Differentialsperre 38, 40 geschlossen wird und erst beim Vorliegen unterschiedlicher Zugbedingungen an den Radpaaren 12, 14 die mittlere Differentialsperre 42 aktiviert wird.

Wie bereits zuvor erläutert, können an allen Rädern 12, 14 wie auch an den Antriebswellen 30, 32 separate Bremsen 56, 58 vorgesehen sein, die es ermöglichen, das durchrutschende Rad 12, 14 oder Radpaar 12, 14 abzubremsen und somit das Antriebsmoment auf das greifende Rad 12, 14 oder Radpaar 12, 14 zu übertragen. In diesem Falle könnten die Differentialsperren 38 bis 42 ersetzt oder zumindest ergänzt werden, wobei der Druck zum Anlegen der Bremsen 56, 58 aus den Ausgangssignalen des Regelkreises 68 hergeleitet wird.

Es ist ferner denkbar, die Differentialsperren 38 und 40 für das vordere und das rückwärtige Differential 20 und 22 wie die Differentialsperre 42 für das mittlere Differential 24 auszubilden, d. h. derart, daß sämtliche Differentiale 20 bis 24 bereits im Außer-Betriebs-Zustand des Kraftfahrzeuges 10 gesperrt sind und erst beim Vorliegen günstiger Umstände geöffnet werden.

## Patentansprüche

1. Antriebssystem für die Räder (12, 14) zweier Radpaare eines Kraftfahrzeuges (10), wobei die Räder (12) mindestens eines Radpaares lenkbar sind und deren Lenkwinkel ($\beta$) und Drehzahl mittels Fühlern (54, 66) erfaßbar sind, mit einem Regelkreis (68), mit jeweils einem Radpaar zugeordneten Differentialen (20, 22) mit Differentialsperren (38, 40), die in Abhängigkeit von der Größe des Lenkwinkels ($\beta$) über den Regelkreis (68) betätigt werden und mit einem über den Regelkreis (68) betätigten Stellglied (42), das zwischen den beiden Differentialen (20, 22) vorgesehen ist, dadurch gekennzeichnet, daß

   a) das Stellglied (42) in einem dritten sperrbaren Differential (24) angeordnet ist, **das**
      **a.1) eingangsseitig mit einem Motor (16) in Verbindung steht und**
      **a.2) ausgangsseitig über jeweils eine Antriebswelle (30, 32) je ein Differential (20, 22) der Radpaare antreibt**
   b) eine Feder (44) vorliegt, die
      b.1) hierzu derart auf das Stellglied (42) wirkt, daß sie in einem Außerbetriebszustand das dritte Differential (24) sperrt und
      b.2) deren Kraft auf das Stellglied (42) graduell in funktionaler Abhängigkeit von den Drehzahlen der Räder (12, 14) und des Lenkwinkels ($\beta$) vom Regelkreis (68) geregelt wird, und
   c) jedem Differential (20, 22, 24) eine eigene Recheneinheit (70, 72, 74) innerhalb des Regelkreises (68) zugeordnet ist.

2. Antriebssystem nach Anspruch 1, dadurch gekennzeichnet, daß das weitere Differential (24) zur Verteilung von Antriebsmomenten entsprechend der Lastverteilung an den Radpaaren (12, 14) ausgebildet ist.

3. Antriebssystem nach Anspruch 1, dadurch gekennzeichnet, daß das weitere Differential (24) über eine kraftschlüssige Differentialsperre (42) sperrbar ist und einen Fühler (64) zum Erfassen der an der Differentialsperre (42) anstehenden Temperatur aufweist.

4. Antriebssystem nach Anspruch 1, dadurch gekennzeichnet, daß jedes Rad (12, 14) mit einer separaten Bremse (58) versehen ist und anstatt der Sperrung der Differentiale (20 bis 24) die Bremsen (58) der jeweils kein Drehmoment übertragenden Räder (12, 14) beaufschlagt werden.

5. Antriebssystem nach Anspruch 4, wobei die den Radpaaren (12, 14) zugeordneten Differentiale (20, 22) über jeweils eine Antriebswelle (30, 32) angetrieben werden, dadurch gekennzeichnet, daß jede Antriebswelle (30, 32) mit einer Bremse (56) versehen ist und daß anstatt der Sperrung des weiteren Differentials (24) die Bremse (56) der Antriebswelle (30, 32) betätigt wird, die dem kein Drehmoment übertragenden Radpaar (12, 14) zugeordnet ist.

6. Antriebssystem nach einem oder mehreren der Ansprüche 1 bis 3, dadurch gekennzeichnet, daß im Außer-Betriebs-Zustand des Antriebssystems alle Differentialsperren (38 bis 42) geschlossen sind.

## Claims

1. Drive system for the wheels (12, 14) of two wheel pairs of a motor vehicle (10), wherein the wheels (12) of at least one wheel pair are steerable and whose steering angle ($\beta$) and speed of rotation can be determined by means of sensors (54, 66), with a control circuit (68), differentials (20, 22) associated each with one wheel pair and having differential locks (38, 40) which are operated in dependence on the magnitude of the steering angle ($\beta$) by the control circuit (68), and with a final control element (42), operated by the control circuit (68), provided between the two differentials (20, 22), characterized in that

   a) the final control element (42) is arranged in a third differential (24) which can be locked and which
      a.1) is coupled on the input side to an engine (16) and
      a.2) on the output side drives the differentials (20, 22) of the wheel pairs through respective drive shafts (30, 32)
   b) a spring (44) is provided which
      b.1) so acts on the final control element (42) that it locks the third differential (24) in an inoperative state and
      b.2) whose force acting on the final control element (42) is controlled gradually by the control circuit (68) in functional dependence on the speeds of rotation of the wheels (12, 14) and the steering angle (β), and

c) each differential (20, 22, 24) has its own associated computer unit (70, 72, 74) within the control circuit (68).

2. Drive system according to claim 1, characterized in that the further differential (24) is designed to distribute drive torque in accordance with the load distribution at the wheel pairs (12, 14).

3. Drive system according to claim 1, characterized in that the further differential (24) can be locked by a frictional differential lock (42) and comprises a sensor (64) for detecting the temperature at the differential lock (42).

4. Drive system according to claim 1, characterized in that each wheel (12, 14) is provided with a separate brake (58) and, instead of locking the differentials (20 to 24), the brakes (58) of each of the wheels (12, 14) transmitting no torque are actuated.

5. Drive system according to claim 4, wherein the differentials (20, 22) associated with the wheel pairs (12, 14) are driven by respective drive shafts (30, 32), characterized in that each drive shaft (30, 32) is provided with a brake (56) and in that, instead of locking the further differential (24), the brake (56) of the drive shaft (30, 32) which is associated with the wheel pair (12, 14) transmitting no torque is actuated.

6. Drive system according to one or more of claims 1 to 3, characterized in that all differential locks (38 to 42) are locked in the non-operating state of the drive system.

**Revendications**

1. Système de transmission pour les roues (12, 14 ) de deux paires de roues d'un véhicule automobile (10), dans lequel les roues (12) d'au moins une paire sont orientables et leur angle de braquage (β) et leur vitesse de rotation peuvent être détectés au moyen de capteurs (54, 66), comprenant un circuit de réglage (68), des différentiels (20, 22) coordonnés chacun à une paire de roues et pourvus de blocages de différentiel (38, 40) manoeuvrés en fonction de la grandeur de l'angle de braquage (β) par l'intermédiaire du circuit de réglage (68), ainsi qu'un organe asservi (42), actionné par l'intermédiaire du circuit de réglage (68), qui est prévu entre les deux différentiels (20, 22), caractérisé en ce que

(a) l'organe asservi (42) est disposé dans un troisième différentiel (24) blocable qui

(a.1) est en liaison avec un moteur (16) par son côté entrée et

(a.2) entraîne, côté sortie, un différentiel (20, 22) pour chacune des paires de roues, chaque fois par l'intermédiaire d'un arbre de transmission (30, 32)

(b) un ressort (44)

(b.1) agit à cet effet sur l'organe asservi (42) de manière à bloquer le troisième différentiel (24) dans un état hors service et

(b.2) dont la force exercée sur l'organe asservi (42) est réglée graduellement par le circuit de réglage en fonction des vitesses de rotation des roues (12, 14) et de l'angle de braquage (β), et

(c) une unité de calcul individuelle (70, 72, 74) est coordonnée à l'intérieur du circuit de réglage (68) à chaque différentiel (20, 22, 24).

2. Système de transmission selon la revendication 1, caractérisé en ce que le différentiel supplémentaire (24) est conçu pour répartir les couples d'entraînement selon la répartition de la charge sur les paires de roues (12, 14).

3. Système de transmission selon la revendication 1, caractérisé en ce que le différentiel supplémentaire (24) est blocable au moyen d'un blocage de différentiel (42) commandé par l'intermédiaire d'un ressort et comporte un capteur (64) pour détecter la température qui apparaît au blocage du différentiel (42).

4. Système de transmission selon la revendication 1, caractérisé en ce que chaque roue (12, 14) est pourvue d'un frein (58) séparé et le blocage des différentiels (20 à 24) est remplacé par le serrage des freins (58) des roues (12, 14) ne transmettant pas de couple à ce moment.

5. Système de transmission selon la revendication 4, dans lequel les différentiels (20, 22) coordonnés aux paires de roues (12, 14) sont entraînés chacun par l'intermédiaire d'un arbre de transmission (30, 32), caractérisé en ce que chaque arbre de transmission (30, 32) est muni d'un frein (56), et que le blocage du différentiel supplémentaire (24) est remplacé par l'actionnement du frein (56) de l'arbre de transmission (30, 32) correspondant à la paire de roues (12, 24) ne transmettant pas de couple.

6. Système de transmission selon une ou plusieurs des revendications 1 à 3, caractérisé en ce que tous les blocages de différentiel (38 à 42) sont fermés ou serrés à l'état hors service du système de transmission.

FIG. 1

FIG.2